# EUROPEAN PATENT SPECIFICATION

(11) **EP 3 361 133 B1**
(45) Date of publication and mention of the grant of the patent: **08.04.2020**
(21) Application number: 15905801.5
(22) Date of filing: 06.10.2015
(51) Int. Cl.: F16L 19/02, F16L 19/028

(54) **CONNECTION MECHANISM FOR COPPER PIPE AND JOINT**
VERBINDUNGSMECHANISMUS FÜR KUPFERROHR UND VERBINDUNGSSTÜCK
MÉCANISME DE RACCORDEMENT POUR TUYAU DE CUIVRE ET RACCORD

(43) Date of publication of application: 15.08.2018
(73) Proprietor: O.N. Industries Ltd., Tsuyama-shi, Okayama 708-0011 (JP)
(72) Inventor: MATSUKI, Ryuta, Tsuyama-shi, Okayama 708-0011 (JP); ASHIDA, Hiroshi, Tsuyama-shi, Okayama 708-0011 (JP)
(74) Representative: Hauck Patentanwaltspartnerschaft mbB
(86) International application number: PCT/JP2015/078400
(87) International publication number: WO 2017/060981

(56) References cited:
- JP-A- 2000 230 676
- JP-A- 2002 364 787
- JP-A- 2008 144 909
- JP-A- 2014 185 674
- JP-A- 2015 172 418
- JP-U- H0 545 491
- US-A- 2 582 746
- US-A- 2 748 463
- US-A- 3 092 404

## Description

The invention relates to a connection mechanism for a copper pipe and a joint, which are used in a refrigerant pipe for a large-sized air conditioner of a building or a factory.

In a conventional refrigerant pipe for the large-sized air conditioner, the copper pipe constituting piping is connected by brazing (for example, see Unexamined Japanese Utility Patent Publication No. 5-45491 and Unexamined Japanese Patent Publication No. 2005-262248).

US 2582746 A discloses a connection mechanism of the prior art for copper pipes.

A flammable gas or an electric heater is used in the brazing. On a repair work site or a construction site in a short construction period where such heating means cannot be used, it is necessary to pay special attention to the brazing, and it is necessary to perform the construction night and day.

The invention relates to a connection mechanism for a copper pipe and a joint, the connection mechanism capable of simply connecting the copper pipe and the joint only by tightening a nut with no use of heat and of performing pipework of the copper pipe with no use of a particular construction technique. According to one aspect of the invention, a connection mechanism for a copper pipe and a joint, the connection mechanism includes: a copper pipe in which a projection including two inclined surfaces is formed in an end outer circumference; a joint including an inner diameter portion in which an end edge side of the projection of the copper pipe is inserted and including a nut engagement cylindrical portion in which a male screw is formed in an outer circumference on one end side, the joint pressing one of the inclined surfaces of the projection; and a nut including a nut body, the nut body including an inclined pressing portion and an opening in which a female screw screwed with the male screw of the nut engagement cylindrical portion is formed in an inner circumferential surface, the inclined pressing portion facing the joint in which the end edge side of the copper pipe is inserted in the inner diameter portion with the projection as a boundary, the inclined pressing portion being externally fitted on the copper pipe to press the other inclined surface of the projection. The copper pipe and the joint are connected to each other by screwing the male screw of the nut engagement portion of the joint in the female screw of the nut body of the nut, a corner portion to a boundary with the inner diameter portion is formed in the joint, the corner portion abutting on one of the inclined surfaces of the projection, the corner portion being generated by forming a large diameter portion from an opening side of the inner circumferential surface of the nut engagement cylindrical portion, the joint includes a fitting cylindrical portion that is located in a center direction of the joint while being adjacent to the nut engagement cylindrical portion, the nut an extended cylindrical portion that extends from the nut body to be externally fitted on the copper pipe and a reinforcement cylindrical portion that extends toward an opposite direction to the extended cylindrical portion of the nut body to be externally fitted on the fitting cylindrical portion of the joint.

In the refrigerant pipe connection mechanism for the copper pipe and the joint, a total length of the reinforcement cylindrical portion, the nut body, and the extended cylindrical portion of the nut is about 2 times of the nominal diameter of the copper pipe.

In the refrigerant pipe connection mechanism for the copper pipe and the joint, a curve is formed in an opening inner circumferential surface at an end of the extended cylindrical portion.

According to the above means, when the end edge side of the projection of the copper pipe is inserted in the inner diameter portion of the joint to tighten the nut externally fitted on the copper pipe to the joint during the connection, the two inclined surfaces of the projection are sandwiched and fixed between the inclined pressing portion of the nut and the corner portion of the joint. At this point, because the reinforcement cylindrical portion of the nut is externally fitted on the fitting cylindrical portion of the joint, straightness of the copper pipe to the joint is maintained, and the extended cylindrical portion of the nut is also externally fitted on the outer circumference, exposed from the nut body, of the copper pipe in which the projection formed in the end outer circumference is sandwiched between the inclined pressing portion of the nut and the corner portion of the joint. Consequently, the straightness of the copper pipe to the nut is further maintained.

During the connection, the joint, the nut, and the copper pipe are integrally and strongly connected straight while maintaining coaxial straightness. Thus, a sealing position where the corner portion and one of the inclined surfaces of the projection are in close contact with each other does not move, but the sealing of a fluid passing through the inner diameter of the joint is surely performed to prevent leakage of the fluid. In the above configuration, when bending moment is generated in the copper pipe by an earthquake, or when stress is applied by movement of a member supporting the copper pipe or the progress of degradation with time, the bending moment or the stress is dynamically applied to an inner circumferential edge of an end edge of the extended cylindrical portion and released, whereby the coaxial straightness of the position where the joint and the nut are connected to each other is maintained. Consequently, the sealing position does not move, but the sealing state is successfully maintained to surely prevent the leakage of a liquid such as a medium, and therefore durability of the connection mechanism is improved.

Additionally, at the sealing position where the corner portion and one of the inclined surfaces are in close contact with each other, sealing is performed by intruding the corner portion of the joint into a surface of the copper pipe because the copper pipe has the low hardness, and necessity of packing member made of polymer is eliminated. Consequently, the connection mechanism of the invention can withstand a large temperature change, and simplification of the connection mechanism can be achieved.

### Brief Description of the Drawings:

- Fig. 1: is a view illustrating a section of an embodiment of the present invention, a right half of Fig. 1 illustrates a state before a nut is tightened, and a left half illustrates a state in which the nut is tightened.
- Fig. 2: is an enlarged view of a main part in Fig. 1.

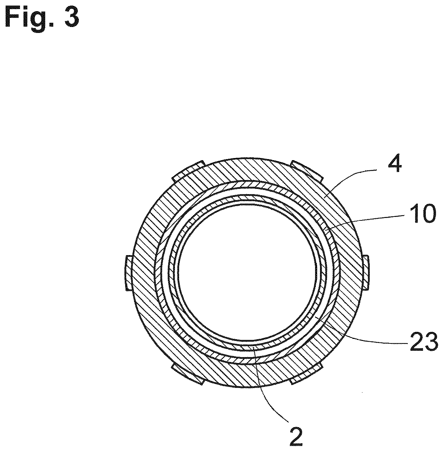

- Fig. 3: is a sectional view taken along a line A-A in Fig. 1.
- Fig. 4: is a sectional view illustrating a main part of a copper pipe expander in which a copper pipe is set.
- Fig. 5: is a sectional view illustrating the main part of the copper pipe expander in which force toward a direction of an arrow P is generated from the state in Fig. 4 to expand the copper pipe.

Hereinafter, an embodiment of the invention will be described with reference to the drawings. A connection mechanism 1 for a copper pipe and a joint of the invention is mainly applied in a refrigerant pipe for a large-sized air conditioner used in a building, a factory, or the like. The connection mechanism 1 mainly includes a copper pipe 2, a joint 3, and a nut 4.

The copper pipe 2 is low in hardness, good in workability, and hardly reacting with the refrigerant, so that the copper pipe 2 is used to deliver refrigerants such as R410A, R407C, and R32 that are of a refrigerant HFC not destroying the ozonosphere. A diameter and a pipe thickness of the copper pipe 2 are selectively used as appropriate according to a flow velocity or a flow rate of the refrigerant. A projection 7 including two inclined surfaces 5, 6 is formed in an outer circumferential surface at one end side of the copper pipe 2. The inclined surfaces 5, 6 may be formed into a chevron shape even if the inclined surfaces 5, 6 are planar or roundish. The projection 7 can easily be formed using a pipe expander (to be described later) immediately before use every time on a piping construction site, or the projection may previously be formed.

The joint 3 includes an inner diameter portion 8 in which an end edge side of the projection 7 of the copper pipe 2 is inserted, a nut engagement cylindrical portion 10 in which a male screw 9 is formed in an outer circumferential surface at one end side, and a corner portion 12 at a boundary with the inner diameter portion 8, the corner portion 12 being generated by forming a large diameter portion 11 from an opening side of an inner circumferential surface of the nut engagement cylindrical portion 10. The corner portion 12 abuts on the inclined surface 5 of the projection 7 to seal a fluid passing in the inner diameter portion 8 such that the fluid leaks to the outside of the connection mechanism 1 through a gap between the outer circumferential surface of the copper pipe 2 and the joint 3 or the nut 4. The corner portion 12 may be formed at a right angle, or cut off a corner to be rounded. However, when a roundness level increases excessively, a contact area with the other inclined surface increases to degrade sealing during the abutment. Consequently, the corner portion 12 is appropriately formed within a range in which fluid leakage is not generated.

A fitting cylindrical portion 13 having a predetermined length and an outer diameter substantially identical to an outer circumference of the nut engagement portion 10 is provided on the side toward a central portion of the outer circumference of the joint 3 while being adjacent to the nut engagement cylindrical portion 10. A central protrusion 14 having a diameter larger than that of the fitting cylindrical portion 13 is provided in the outer circumference in the central portion of the joint 3 while being adjacent to the fitting cylindrical portion 13. An inner-surface protrusion 15 corresponding to a thickness of the copper pipe 2 is provided in the inner circumferential surface in the center of the inner diameter portion 8 of the joint 3. When the end edge side of the copper pipe 2 is inserted in the inner diameter portion 8, the inner-surface protrusion 15 decreases a step in a passage to prevent generation of turbulence of the fluid passing through the inside, and prevents a decrease in flow velocity.

The nut 4 connects the copper pipe 2 and the joint 3 by tightening the copper pipe 2 and the joint 3 using a screw. The nut 4 includes an inclined pressing portion 16 and a nut body 19. The inclined pressing portion 16 is externally fitted on the copper pipe 2 to press the inclined surface 6 of the projection 7 while the end edge side of the copper pipe 2 faces the joint 3 inserted in the inner diameter portion 8 with the projection 7 as a boundary. The nut body 19 includes an opening 18 in which a female screw 17 screwed with the male screw 9 of the nut engagement cylindrical portion 10 is formed in the inner circumferential surface. The nut 4 also includes an extended cylindrical portion 20 that extends from the nut body 19 to be externally fitted on the copper pipe 2 and a reinforcement cylindrical portion 21 that extends from the nut body 19 toward an opposite direction to the extended cylindrical portion 20 to be externally fitted on the fitting cylindrical portion 13 of the joint 3. A total length of the reinforcement cylindrical portion 21, the nut body 19, and the extended cylindrical portion 20 is preferably 1.3 to 3.0 times a nominal diameter that is of the outer diameter of the copper pipe 2, more preferably 1.5 to 2.5 times, most preferably about 2 times. This is because bending strength including a bending load and a bending angle of the connection mechanism 1 for the copper pipe 2 and the joint 3 is most successfully maintained. When the total length of the reinforcement cylindrical portion 21, the nut body 19, and the extended cylindrical portion 20 is shorter than 1.3 times the nominal diameter, the bending strength is inferior. When the total length is longer than 3.0 times the nominal diameter, sometimes piping construction is obstructed although the bending strength is improved, and wasteful material cost is generated. A length ratio of the reinforcement cylindrical portion 21, the nut body 19, and the extended cylindrical portion 20 is preferably about 1 : 2 : 3 from the viewpoints of the bending strength, the material cost, and assembly work on the construction site.

When the lengths of the reinforcement cylindrical portion 21 and the fitting cylindrical portion 13 are set such that the reinforcement cylindrical portion 21 is externally fitted on the fitting cylindrical portion 13 to abut a leading end of the reinforcement cylindrical portion 21 on a side face of the central protrusion of the joint 3 in screwing the male screw 9 of the nut engagement portion 10 of the joint 3 in the female screw 17 of the nut body 19 of the nut 4, there is an advantage for locking the screw because a frictional resistance between screw threads increases when the male screw 9 is screwed in the female screw 17. When a curve 22 is formed in an inner circumferential corner portion at an opening end edge of the extended cylindrical portion 20, work to fit the nut 4 in the copper pipe 2 is easily performed during pipe expansion work (to be described later).

Because the sealing is performed by abutting the corner portion 12 on the inclined surface 5, the fluid passing through the joint 3 does not enter a closed space 23, which is formed when a space formed by a difference in diameter between the inner diameter portion 8 of the nut engagement cylindrical portion 10 and the large diameter portion 11 is closed by the inclined surface 5. For this reason, it is not necessary to take a measure to prevent the leakage by filling the closed space 23 with a packing member made of a synthetic resin. It is not necessary that the inner circumferential surface of the extended cylindrical portion 20 and the outer circumferential surface of the copper pipe 2 be in surface contact with each other in a lengthwise direction, but it is only necessary that the outer circumferential surface of the copper pipe 2 be closely fitted in the inner circumferential surface of the extended cylindrical portion 20 at an end on the side of the nut body 19 and at an opening end.

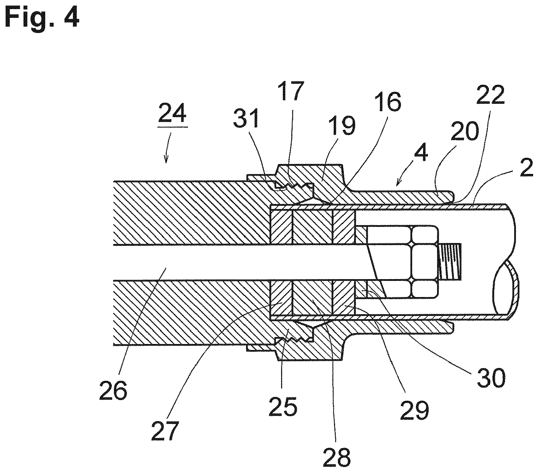

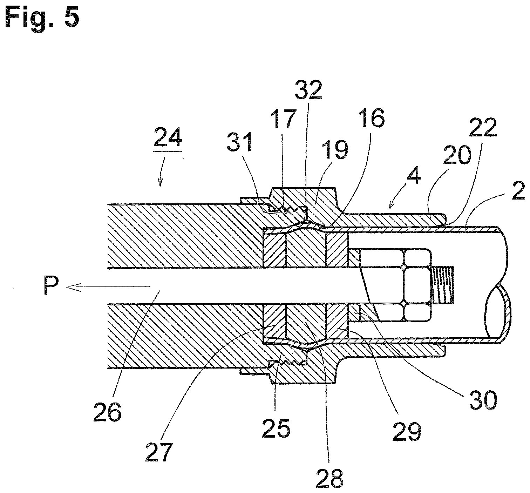

Connection work of the copper pipe and joint connection mechanism 1 of the invention having the above configuration will be described below. At one end of the copper pipe 2 cut into a desired length, the projection 7 is formed at a position slightly separated from the end edge. The work to form the projection 7 can be eliminated when the projection 7 previously formed in a factory is carried and used. On the other hand, when the projection 7 is formed immediately before the use on the piping construction site in the building or the factory, conveniently the copper pipe 2 can appropriately be cut to adjust the length, and advantageously the wasteful use of the copper pipe 2 can be prevented. At this point, a compact, simple pipe expander 24 in Figs. 4 and 5 is used. The pipe expander 24 includes a pipe expansion head 25 fixed to a base (not illustrated), a shaft 26 movably inserted in the pipe expansion head 25, a rubber receiver 27 externally fitted on the shaft 26, a pipe expansion rubber 28, a rubber holder 29, and a locking portion 30 fixed to the leading end of the shaft 26.

In forming the projection 7, first the copper pipe 2 is inserted in the nut 4 as illustrated in Fig. 4. At this point, the copper pipe 2 is easily inserted in the nut 4 when the curve 22 is formed in the inner circumferential corner portion at the opening end edge of the extended cylindrical portion 20. Subsequently, a male screw 31 formed in the outer circumference of the pipe expansion head 25 is screwed in the female screw 17 of the nut body 19 of the nut 4 previously externally fitted on the copper pipe 2. In screwing the male screw 31 in the female screw 17, the shaft 26, the rubber receiver 27, the pipe expansion rubber 28, the rubber holder 29, and the locking portion 30 are simultaneously inserted in the copper pipe 1 from the end of the copper pipe 1. When the shaft 26 is pulled in a direction of an arrow P using a device (not illustrated), the locking portion 30 presses the rubber holder 29 in the direction of the arrow P as illustrated in Fig. 5, the pipe expansion rubber 28 that is sandwiched between the rubber receiver 27 and the rubber holder 29 and pressed from both sides decreases in width of an axial direction, and expands in a circumferential direction by a decreased volume. A projection space formed by a notch 32 formed at the leading ends in the inner circumferential surfaces of the inclined pressing portion 16 of the nut 4 and the pipe expansion head 25 exists in the outer circumference of the expanded pipe expansion rubber 28. Consequently, as the pipe expansion rubber 28 expands in the circumferential direction, the end of the copper pipe 2 is swollen along the notch 32 formed at the leading ends in the inner circumferential surfaces of the inclined pressing portion 16 of the nut 4 and the pipe expansion head 25, and the projection 7 including the two inclined surfaces 5, 6 is formed. Subsequently, the nut 4 is inverted to unscrew the pipe expansion head 25 and the nut 4, and the pipe expansion head 25 is pulled out from the copper pipe 2, thereby ending the pipe expansion work. The nut 4 may be kept being inserted in the copper pipe 2.

When the projection 7 is formed in this way, an inclination angle of the inclined surface 6 is equal to an inclination angle of the inclined pressing portion 16, so that there is an advantage that axis lines of the joint 3 and the nut 4 are aligned with each other to improve a degree of adhesion when the joint 3 and the nut 4 are screwed with each other. The copper pipe 2 is expanded by a rubber pipe expansion method in which statically uniform force is applied into the copper pipe 2, so that there is an advantage that processing can be performed without substantially generating work hardening and residual stress.

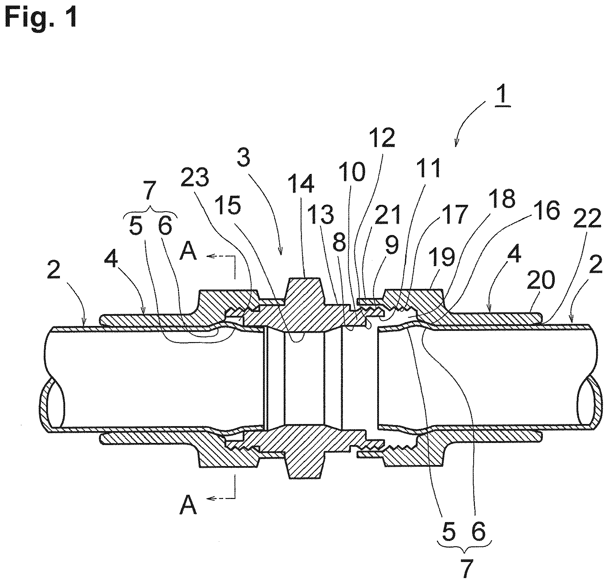

When the projection 7 is formed in the copper pipe 2 using the pipe expander 1 as described above, the nut 4 used in the pipe expansion is externally fitted on the copper pipe 2 as it is. Consequently, as illustrated in the right side of Fig. 1, the fitting cylindrical portion 13 of the joint 3 is introduced into the opening 18 while facing the opening 18, and the male screw 9 in the outer circumference of the nut engagement cylindrical portion 10 and the female screw 17 emerging in the opening 18 are screwed with each other, thereby performing the connection work. Thus, as illustrated in the left side of Fig. 1, the joint 3 and the copper pipe 2 are connected by the nut 4 to end the connection work.

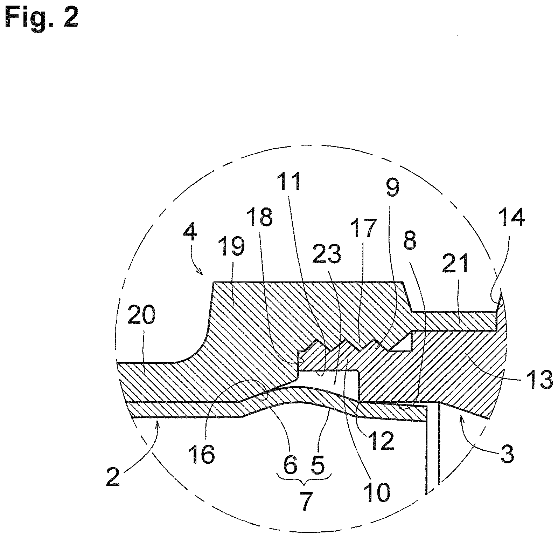

As to the connection state, by tightening the male screw 9 and the female screw 17, pressing force is applied to the inclined surface 5 of the projection 7 in a center direction of the projection 7 of the inclined pressing portion 16 by of the nut 4, and pressing force is applied to the inclined surface 6 in the center direction of the projection 7 by the corner portion 12 of the joint 3, so that the copper pipe 2 is surely connected between the nut 4 and the joint 3 without slipping out. At this point, as well illustrated in Fig. 2, the corner portion 12 is connected while strongly pressed against the inclined surface 5 made of a copper material having low hardness, so that the sealing is surely performed to prevent the leakage of the fluid passing through the joint 3. The fitting cylindrical portion 13 of the joint 3 is fitted in the reinforcement cylindrical portion 21 of the nut 4, and the copper pipe 2 is fitted in the extended cylindrical portion 20 extending from the nut body 19 toward the opposite direction to the projection 7. Consequently, the joint 3 and the copper pipe 2 are coaxially and linearly connected to each other to a long distance, and the bending strength such as the bending load and the bending angle are enhanced as a whole of the connection mechanism 1. This enables the sealing to be always performed at the same position while the pressing position of the inclined surface 5 of the corner portion 12 is not shifted, so that there is an advantage that sealing performance is improved.

The leading end of the reinforcement cylindrical portion 21 also abuts on the side face of the central protrusion 14 of the joint 3 by the tightening, and there is an advantage for locking the screw because frictional force between contact surfaces of the screw threads of the male screw 9 and the female screw 1 increases by reaction force of the tightening. Additionally, as illustrated in Fig. 2, the leading end of the nut engagement cylindrical portion 10 abuts on the side end face of the opening 18, because the reaction force is also generated in this case, the screw is further locked by increasing the frictional force between the male screw 9 and the female screw 1. In the embodiment, the outer diameter of the nut body 19 is increased while the outer diameters of the reinforcement cylindrical portion 21 and the extended cylindrical portion 20 are decreased. However, the outer diameters or the sizes of the nut body 19, the reinforcement cylindrical portion 21, and the extended cylindrical portion 20 may appropriately be changed from the viewpoint of strength reinforcement or appearance such that the nut body 19, the reinforcement cylindrical portion 21, and the extended cylindrical portion 20 are set to the identical outer diameter. Stainless steel is preferably used as the joint 3 and the nut 4.

The copper pipe and joint connection mechanism of the invention is suitably applied to the refrigerant pipe for the large-sized air conditioner used in a building, a factory, or the like.

### Description of the reference numerals

1. connection mechanism for copper pipe and joint
2. copper pipe
3. joint
4. nut
5. inclined surface
6. inclined surface
7. projection
8. inner diameter portion
9. male screw
10. nut engagement cylinder portion
11. large diameter portion
12. corner portion
13. fitting cylindrical portion
14. center protrusion
16. inclined pressing portion
17. female screw
18. opening
19. nut body
20. extended cylinder portion
21. reinforcement cylinder portion
22. curve

## Claims

1. A connection mechanism (1) for a copper pipe (2) and a joint (3), the connection mechanism (1) comprising:
a copper pipe (2) in which a projection (7) including two inclined surfaces (5, 6) is formed in an end outer circumference;
a joint (3), the joint (3) including an inner diameter portion (8) in which an end edge side of the projection (7) of the copper pipe (2) is inserted and including a nut (4) engagement cylindrical portion in which a male screw (9) is formed in an outer circumference on one end side, the joint (3) pressing one of the inclined surfaces (5, 6) of the projection (7); and
a nut (4) including a nut body (19), the nut body (19) including an inclined pressing portion (16) and an opening (18) in which a female screw (17) screwed with the male screw (9) of the nut engagement cylindrical portion (10) is formed in an inner circumferential surface, the inclined pressing portion (16) facing the joint (3) in which the end edge side of the copper pipe (2) is inserted in the inner diameter portion (8) with the projection (7) as a boundary, the inclined pressing portion (16) being externally fitted on the copper pipe (2) to press the other inclined surface (5, 6) of the projection (7),
wherein the copper pipe (2) and the joint (3) are connected to each other by screwing the male screw (9) of the nut engagement cylinder portion (10) of the joint (3) in the female screw (17) of the nut body (19) of the nut (4),
a corner portion (12) to a boundary with the inner diameter portion (8) is formed in the joint (3), the corner portion (12) abutting on one of the inclined surfaces (5, 6) of the projection (7), the corner portion (12) being generated by forming a large diameter portion from (11) an opening side of the inner circumferential surface of the nut engagement cylindrical portion (10),
the joint (3) includes a fitting cylindrical portion (13) that is located in a center direction of the joint (3) while being adjacent to the nut engagement cylindrical portion (10),
the nut (4) includes an extended cylindrical portion (20) that extends from the nut body (19) to be externally fitted on the copper pipe (2) and a reinforcement cylindrical portion (21) that extends toward an opposite direction to the extended cylindrical portion (20) of the nut body (19) to be externally fitted on the fitting cylindrical portion (13) of the joint (3).

2. The connection mechanism (1) for the copper pipe (2) and the joint (3) according to claim 1, wherein a total length of the reinforcement cylindrical portion (21) of the nut (4), the nut body (19), and the extended cylindrical portion (20) is about 2 times a nominal diameter of the copper pipe.

3. The connection mechanism (1) for the copper pipe (2) and the joint (3) according to claim 1 or claim 2, wherein a curve (22) is formed in an opening inner circumferential surface at an end of the extended cylindrical portion (20).

## Patentansprüche

1. Verbindungsmechanismus (1) für ein Kupferrohr (2) und ein Verbindungsstück (3), wobei der Verbindungsmechanismus (1) Folgendes umfasst:
ein Kupferrohr (2), bei dem ein Vorsprung (7), der zwei geneigte Flächen (5, 6) umfasst, an einem endseitigen Außenumfang gebildet ist;
ein Verbindungsstück (3), wobei das Verbindungsstück (3) einen Innendurchmesserabschnitt (8) umfasst, in den eine endseitige Kantenseite des Vorsprungs (7) des Kupferrohrs (2) eingeführt ist und der einen zylindrischen Muttereingriffsabschnitt (10) umfasst, in dem eine Außengewindeschraube (9) in einem Außenumfang an einer Endseite gebildet ist, wobei das Verbindungsstück (3) eine der geneigten Flächen (5, 6) des Vorsprungs (7) drückt; und
eine Mutter (4), umfassend einen Mutternkörper (19), wobei der Mutternkörper (19) einen geneigten Drückabschnitt (16) und eine Öffnung (18) umfasst, in der eine Innengewindeschraube (17), die mit der Außengewindeschraube (9) des zylindrischen Muttereingriffabschnitts (10) verschraubt ist, an einer inneren Umfangsfläche gebildet ist, wobei der geneigte Drückabschnitt (16) dem Verbindungsstück (3) zugewandt ist, in den die endseitige Kantenseite des Kupferrohrs (2) in den Innendurchmesserabschnitt (8) mit dem Vorsprung (7) als Begrenzung eingeführt ist, wobei der geneigte Drückabschnitt (16) extern auf das Kupferrohr (2) gesetzt wird, um die andere geneigte Fläche (5, 6) des Vorsprungs (7) zu drücken,
wobei das Kupferrohr (2) und das Verbindungsstück (3) durch Einschrauben der Außengewindeschraube (9) des zylindrischen Muttereingriffsabschnitts (10) des Verbindungsstücks (3) in die Innengewindeschraube (17) des Mutternkörpers (19) der Mutter (4) miteinander verbunden sind,
ein Eckabschnitt (12) zu einer Begrenzung mit dem Innendurchmesserabschnitt (8) in dem Verbindungsstück (3) gebildet ist, wobei der Eckabschnitt (12) an einer der geneigten Flächen (5, 6) des Vorsprungs (7) anliegt, wobei der Eckabschnitt (12) durch Bilden eines großen Durchmesserabschnitts (11) aus einer Öffnungsseite an der Innenumfangsfläche des zylindrischen Muttereingriffsabschnitts (10) erzeugt wird,
das Verbindungsstück (3) einen zylindrischen Aufsetzabschnitt (13) umfasst, der sich in einer Mittenrichtung des Verbindungsstücks (3) befindet, während er an den zylindrischen Muttereingriffsabschnitt (10) angrenzt,
die Mutter (4) einen erweiterten zylindrischen Abschnitt (20), der sich von dem Mutternkörper (19) erstreckt, um extern auf das Kupferrohr (2) aufgesetzt zu werden, und einen zylindrischen Verstärkungsabschnitt (21) umfasst, der sich in eine dem erweiterten zylindrischen Abschnitt (20) des Mutternkörpers (19) entgegengesetzte Richtung erstreckt, um extern auf den zylindrischen Aufsetzabschnitt (13) des Verbindungsstücks (3) aufgesetzt zu werden.

2. Verbindungsmechanismus (1) für das Kupferrohr (2) und das Verbindungsstück (3) nach Anspruch 1, wobei eine Gesamtlänge des zylindrischen Verstärkungsabschnitts (21) der Mutter (4), des Mutternkörpers (19) und des erweiterten zylindrischen Abschnitts (20) in etwa doppelt so groß wie ein Nenndurchmesser des Kupferrohrs ist.

3. Verbindungsmechanismus (1) für das Kupferrohr (2) und das Verbindungsstück (3) nach Anspruch 1 oder Anspruch 2, wobei eine Kurve (22) in einer Innenumfangsöffnungsfläche an einem Ende des erweiterten zylindrischen Abschnitts (20) gebildet ist.

## Revendications

1. Mécanisme de raccordement (1) pour un tuyau de cuivre (2) et un raccord (3), le mécanisme de raccordement (1) comprenant :
un tuyau de cuivre (2) dans lequel une saillie (7) comprenant deux surfaces inclinées (5, 6) est formée dans une circonférence extérieure d'extrémité ;
un raccord (3), le raccord (3) comprenant une partie diamètre intérieur (8) dans laquelle un côté de bord d'extrémité de la saillie (7) du tuyau de cuivre (2) est inséré et comprenant une partie cylindrique de mise en prise d'écrou (10) dans laquelle une vis mâle (9) est formée dans une circonférence extérieure sur un côté d'extrémité, le raccord (3) pressant une des surfaces inclinées (5, 6) de la saillie (7) ; et
un écrou (4) comprenant un corps d'écrou (19), le corps d'écrou (19) comprenant une partie de pression inclinée (16) et une ouverture (18) dans laquelle une vis femelle (17) vissée avec la vis mâle (9) de la partie cylindrique de mise en prise d'écrou (10) est formée dans une surface circonférentielle intérieure, la partie de pression inclinée (16) faisant face au raccord (3) dans laquelle le côté de bord d'extrémité du tuyau de cuivre (2) est inséré dans la partie diamètre intérieur (8) avec la saillie (7) comme limite, la partie de pression inclinée (16) étant montée de manière externe sur le tuyau de cuivre (2) pour presser l'autre surface inclinée (5, 6) de la saillie (7),
dans lequel le tuyau de cuivre (2) et le raccord (3) sont connectés l'un à l'autre en vissant la vis mâle (9) de la partie cylindrique de mise en prise d'écrou (10) du raccord (3) dans la vis femelle (17) du corps d'écrou (19) de l'écrou (4),
une partie coin (12) à une limite avec la partie diamètre intérieur (8) est formée dans le raccord (3), la partie coin (12) venant en butée sur une des surfaces inclinées (5, 6) de la saillie (7), la partie coin (12) étant générée par la formation d'une grande partie diamètre (11) à partir d'un côté ouverture de la surface circonférentielle intérieure de la partie cylindrique de mise en prise d'écrou (10),
le raccord (3) comprend une partie cylindrique de réglage (13) qui est située dans une direction centrale du raccord (3) tout en étant adjacente à la partie cylindrique de mise en prise d'écrou (10),
l'écrou (4) comprend une partie cylindrique allongée (20) qui s'étend du corps d'écrou (19) pour être montée de manière externe sur le tuyau de cuivre (2) et une partie cylindrique de renforcement (21) qui s'étend dans une direction opposée à la partie cylindrique allongée (20) du corps d'écrou (19) pour être montée de manière externe sur la partie cylindrique de réglage (13) du raccord (3).

2. Mécanisme de raccordement (1) pour le tuyau de cuivre (2) et le raccord (3) selon la revendication 1, dans lequel une longueur totale de la partie cylindrique de renforcement (21) de l'écrou (4), du corps d'écrou (19) et de la partie cylindrique allongée (20) est environ deux fois un diamètre nominal du tuyau de cuivre.

3. Mécanisme de raccordement (1) pour le tuyau de cuivre (2) et le raccord (3) selon la revendication 1 ou 2, dans lequel une courbe (22) est formée dans une surface circonférentielle intérieure d'ouverture à une extrémité de la partie cylindrique allongée (20).
